# EUROPÄISCHE PATENTSCHRIFT

(11) **EP 0 703 132 B1**
(45) Veröffentlichungstag und Bekanntmachung des Hinweises auf die Patenterteilung: **25.07.2001**
(21) Anmeldenummer: 95113047.5
(22) Anmeldetag: 18.08.1995
(51) Int. Cl.: B60T 11/20

(54) **Hauptbremszylinder**
Brake master cylinder
Maître-cylindre de frein

(30) Priorität: 20.09.1994 DE 9415262 U
(43) Veröffentlichungstag der Anmeldung: 27.03.1996
(73) Patentinhaber: Lucas Industries Limited, London W1Y 4DJ (GB)
(72) Erfinder: Mallmann, Markus, D-56291 Pfalzfeld (DE)
(74) Vertreter: Schmidt, Steffen J., Dipl.-Ing.

(56) Entgegenhaltungen:
- EP-A- 0 065 891
- EP-A- 0 417 981
- WO-A-92/06875
- DE-C- 4 303 269
- US-A- 5 207 062

## Beschreibung

Die vorliegende Erfindung betrifft einen Bremskraftverstärker mit einem Hauptbremszylinder gemäß dem Oberbegriff des Patentanspruchs 1.

Der Hauptbremszylinder weist einen Primärkolben und einen Sekundärkolben auf, der durch einen quer zur Längsachse des Hauptbremszylinders in einer Bohrung aufgenommenen Anschlagstift in seiner Axialbeweglichkeit begrenzt ist. Mit dem Hauptbremszylinder ist ein Vorratsbehälter für Bremsflüssigkeit mit einem Anschluß verbunden, der in axialer Verlängerung zu dem Anschlagstift angeordnet ist.

Die US-A-4 127 210 beschreibt ein Hauptbremszylinderreservoir, das besonders gestaltet ist, um ein Schwappen von Bremsfluid in dem Reservoir zu verhindern. Figur 1 dieser Druckschrift stellt eine sich nach unten erstreckende Muffe des Reservoirs dar, die mit einer Dichtung in eine ringförmige Krempe eines Hauptbremszylinders eingesetzt ist. Quer zu einer Längsachse des Hauptbremszylinders ist in einer Bohrung ein Stift aufgenommen, der einen Sekundärkolben in seiner Beweglichkeit begrenzt. Der Stift weist einen Bund auf, der einerseits am Bremskraftverstärker anliegt und verhindert, daß der Stift in die Bohrung gleitet, und andererseits gegen einen Rand der Muffe anschlägt und so verhindert, daß der Stift aus der Bohrung gleitet. Die Muffe weist unter anderem eine quergerichtete Bodenfläche mit einer kreisförmigen Öffnung auf, wobei die Öffnung über der Bohrung angeordnet ist, so daß die Bodenfläche diese Bohrung gerade nicht überdeckt. Die Funktion der Bodenfläche ist in der US-A-4 127 210 nicht näher beschrieben und daher unklar. Zum Abstützen des Stiftes, um dessen Herausfallen zu verhindern, ist die Bodenplatte jedenfalls nicht geeignet. Um bei diesem Hauptbremszylinderreservoir den Stift mit einem Bund zu versehen, ist ein zusätzlicher Arbeitsgang erforderlich.

Der Anschlagstift kann, z.B. wie in der WO-A-92/06875 beschrieben, in einem Sackloch in der gegenüberliegenden Wand des Hauptbremszylinders aufgenommen sein. Die Bohrung und der Anschlagstift sind jeweils so dimensioniert, daß der Stift ohne größeren Kraftaufwand in die Bohrung eingeschoben werden kann. Das bedeutet, daß bei ungünstigen Toleranzpaarungen zwischen der Bohrung und dem Anschlagstift der Anschlagstift so viel Spiel in der Bohrung hat, daß er während des Transports oder der Montage herausfallen könnte. Beim Stand der Technik (Fig. 4 und 5), wie er beispielsweise in der WO-A-92/06875 beschrieben ist, ist eine Sicherungsscheibe in den Grund der Anschlußmuffe in dem Hauptbremszylinder eingelegt. Diese Sicherungsscheibe überdeckt die Bohrung des Anschlagstiftes und weist Schlitze oder Löcher auf, durch die die Bremsflüssigkeit aus dem Vorratsbehälter in den Hauptbremszylinder fließen kann. Eine Gummidichtung hält die Sicherungsscheibe in der Anschlußmuffe.

Das Problem dieser Anordnung besteht darin, daß die Sicherungsscheibe als zusätzliches Bauteil erforderlich ist. Darüber hinaus muß vor der Montage des Vorratsbehälters an dem Hauptbremszylinder überprüft werden, ob die Sicherungsscheibe in die Anschlußmuffe eingelegt ist. Das zusätzliche Bauteil und der zusätzliche Arbeitsgang verursachen Kosten und stellen einen Unsicherheitsfaktor dar.

Zur Lösung dieses Problems ist der Bremskraftverstärker erfindungsgemäß mit den Merkmalen des Anspruchs 1 oder 4 gestaltet. Ferner ist das Problem erfindungsgemäß durch eine Dichtung gemäß Anspruch 8 gelöst.

Damit kann die Sicherungsscheibe entfallen, da direkt durch das Montieren des Vorratsbehälter an dem Hauptbremszylinder ein Herausfallen des Anschlagstiftes verhindert wird.

Vorzugsweise ist der Quersteg im Bereich des freien Endes des Stutzens angeordnet.

In einer Ausführungsform der Erfindung hat die Dichtung einen im wesentlichen trogförmigen Längsschnitt, wobei der Boden des Troges durch den Quersteg gebildet ist. Neben dem Quersteg sind Durchlaßöffnungen für die Bremsflüssigkeit. Der Quersteg kann auch so gestaltet sein, daß er sich nicht über den gesamten Durchmesser des Bodens erstreckt, sondern vom Rand der Dichtung etwa bis zur Mitte.

Sowohl bei der Ausgestaltung des Quersteges an oder in dem Stutzen als auch bei der Ausgestaltung des Quersteges an oder in der Dichtung ist der Quersteg so dimensioniert, daß er im endmontierten Zustand des Vorratsbehälters an dem Hauptbremszylinder ein Herausfallen des Anschlagstiftes verhindert, ohne dabei den Fluß der Bremsflüssigkeit zu beeinträchtigen.

Weitere Ausgestaltungen, Vorteile und Einzelheiten der Erfindung ergeben sich aus der Beschreibung der beigefügten Figuren, in denen
- Fig. 1: einen Längsschnitt durch einen Hauptbremszylinder mit angeflanschtem Vorratsbehälter gemäß der Erfindung zeigt;
- Fig. 2: eine Ausschnittsvergrößerung von Fig. 1;
- Fig. 3a: eine vergrößerte Ansicht des Stutzens des Vorratsbehälters von unten zeigt;
- Fig. 3b: eine Schnittdarstellung des Stutzens aus Fig. 3a entlang der Linie A-A zeigt;
- Fig. 4: einen Längsschnitt durch einen Hauptbremszylinder mit angeflanschtem Vorratsbehälter gemäß dem Stand der Technik zeigt, und
- Fig. 5: eine Ausschnittsvergrößerung von Fig. 4 zeigt.

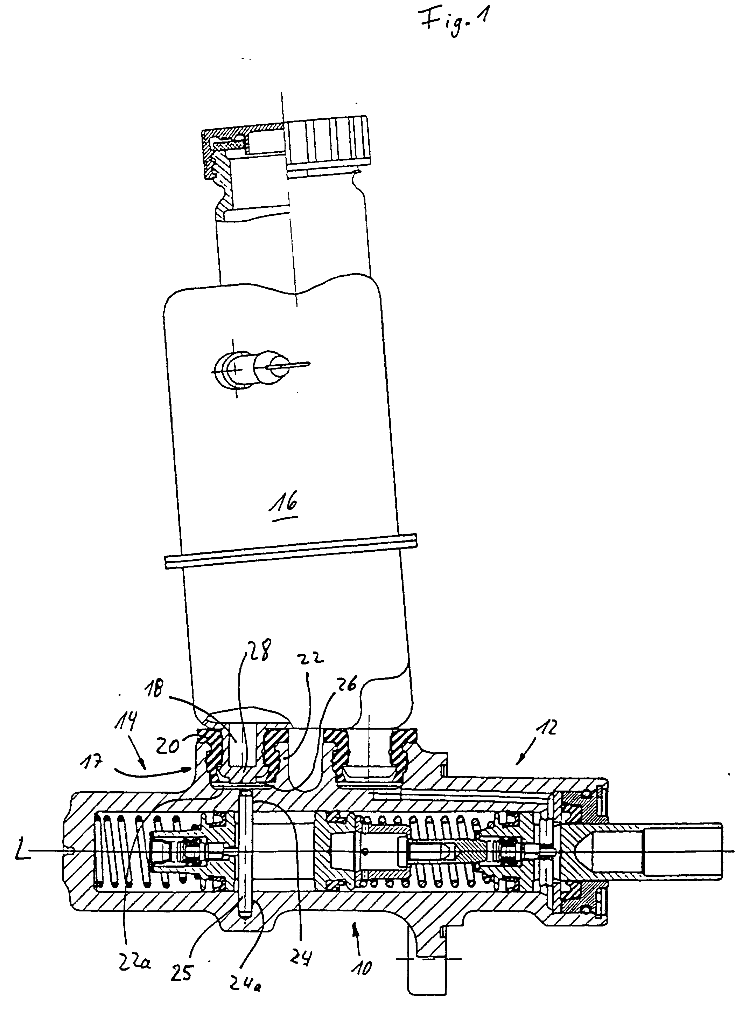

Fig. 1 zeigt einen Hauptbremszylinder 10, der einen Primärkolben 12 und einen Sekundärkolben 14 aufweist. An dem Hauptbremszylinder 10 ist ein Vorratsbehälter 16 für Bremsflüssigkeit angebracht. Der Vorratsbehälter 16 hat eine im wesentlichen hohlzylindrische Gestalt und weist an seinem dem Hauptbremszylinder 10 zugewandten Ende einen Anschluß 17 auf, der durch einen Stutzen 18 und eine den Stutzen umgebende Dichtung 20 gebildet ist. Der Anschluß 17 ist in einer Anschlußmuffe 22 des Hauptbremszylinders 10 flüssigkeitsdicht aufgenommen. Der Grund der Anschlußmuffe 22 weist eine Bohrung 24 auf, die sich auf der diametral gegenüberliegenden Seite in ein Sackloch 24a fortsetzt. In dieser Bohrung 24 bzw. dem Sackloch 24a ist ein Anschlagstift 25 aufgenommen, der die Axialbeweglichkeit des Sekundärkolbens 14 entlang der Längsachse L begrenzt.

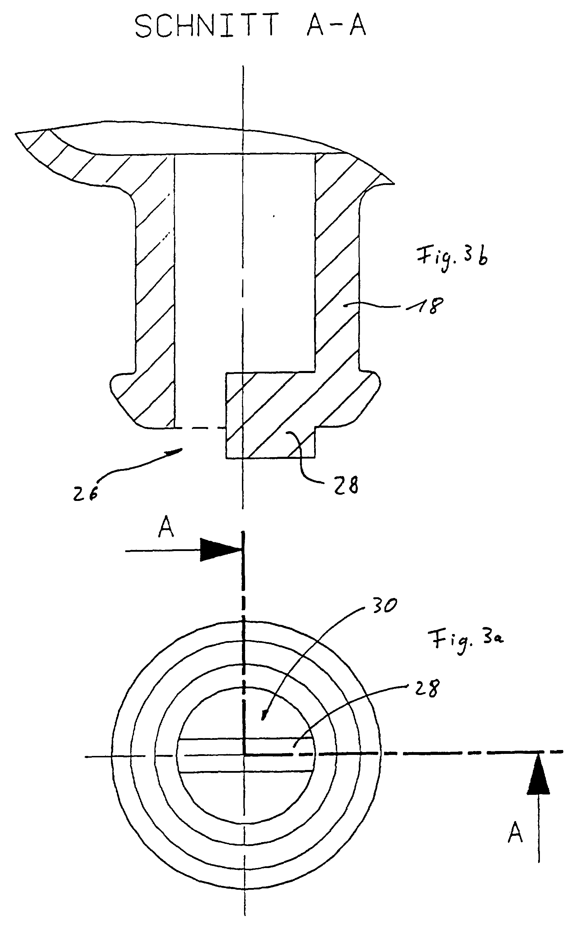

In dem Stutzen 18 ist an dessen freiem Ende 26 ein Quersteg 28 angeformt, der sich diametral über den gesamten Innendurchmesser des Stutzens 18 erstreckt. Wie in den Fig. 3a, 3b gezeigt, überdeckt der Quersteg 28 eine Durchlaßöffnung 30 des Stutzens nur etwa 10-20%, so daß der Strom der Bremsflüssigkeit aus dem Vorratsbehälter 16 in den Hauptbremszylinder 10 noch nicht beeinträchtigt ist. Die Bohrung 24 ist in dem Hauptbremszylinder 10 so angeordnet, daß sie bei eingesetztem Vorratsbehälter mit dem Steg 28 fluchtet. Damit kann der in die Bohrung 24 bzw. in das Sackloch 24a eingesetzter Anschlagstift 25 nicht aus der Bohrung bzw. dem Sackloch 24a (in den Vorratsbehälter 16) fallen. Der Anschlagstift 25 kann eine (nicht veranschaulichte) Längsbohrung mit einer Radialöffnung aufweisen, damit die Bremsflüssigkeit aus dem Vorratsbehälter 16 in das Innere des Hauptbremszylinders 10 einströmen kann. Darüber hinaus kann neben der Bohrung 24 noch eine oder mehrere weitere (nicht veranschaulichte) Bohrung(en) im Grund 22a der Anschlußmuffe 22 vorgesehen sein, die in das Innere des Hauptbremszylinders 10 reichen. Der Quersteg kann entweder den gezeigten etwa rechteckigen oder einen strömungstechnisch günstigeren Querschnitt haben.

Gemäß einer weiteren, nicht dargestellten Ausführungsform der Erfindung kann anstelle des Quersteges 28 in dem Stutzen 18 der Quersteg 28' auch in oder an der Dichtung 20 ausgebildet sein. Die Dichtung ist dabei so gestaltet, daß sie den Stutzen 18 ringförmig umschließt und an ihrem dem Grund 22a der Anschlußmuffe 22 zugewandten Ende einen Quersteg aufweist, der das freie Ende 26 des Stutzens 18 übergreift. Auch hier ist die Anordnung so getroffen, daß der Quersteg mit der Bohrung 24 bzw. dem Sackloch 24a fluchtend in die Anschlußmuffe 22 eingesetzt werden kann.

Die Herstellung der Dichtung 20 mit dem Quersteg kann zwar kostengünstiger sein als die Ausgestaltung des Stutzens 18 mit dem Quersteg 28. Allerdings kann bei dem Quersteg 28 in dem Stutzen 18 durch die Orientierung des Vorratsbehälters 16 koaxial zu der Längsachse L des Hauptbremszylinders 10 die genaue Ausrichtung des Quersteges 28 zu der Bohrung 24 bzw. dem Sackloch 24a leichter sichergestellt werden als bei einer rotationssymmetrischen Dichtung 20. Bei der Dichtung 20 kann der Quersteg auch gitterförmig ausgestaltet sein, so daß auch bei beliebiger Orientierung der Dichtung 20 in der Anschlußmuffe 22 sichergestellt ist, daß ein Anschlagstift 25 nicht aus der Bohrung 24 bzw. dem Sackloch 24a herausfallen kann.

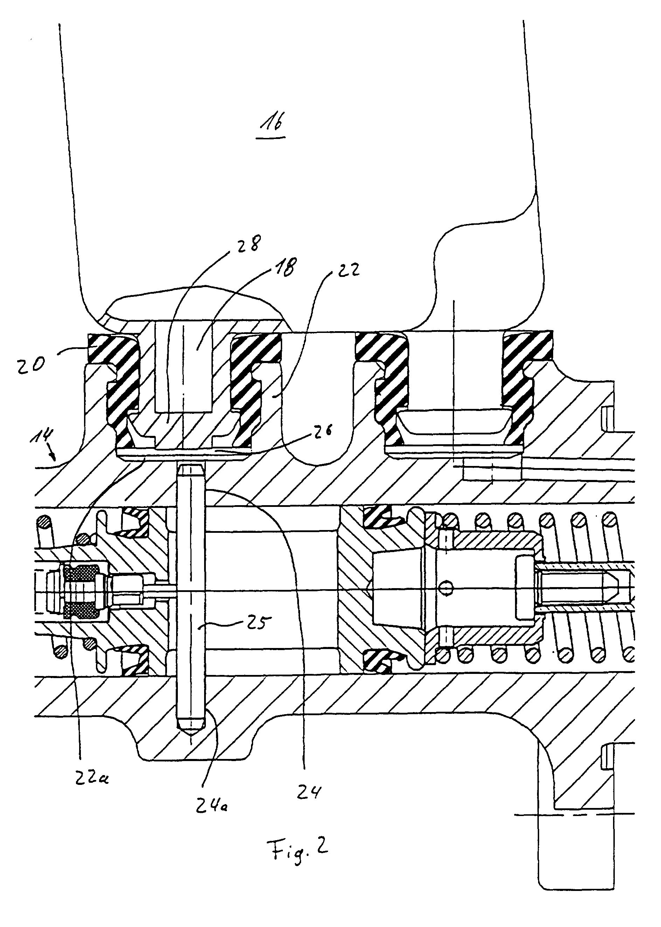

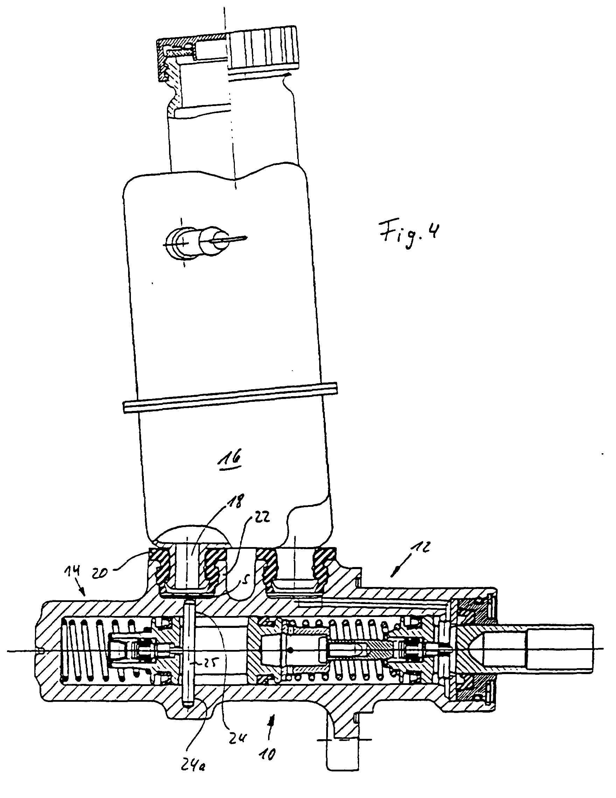

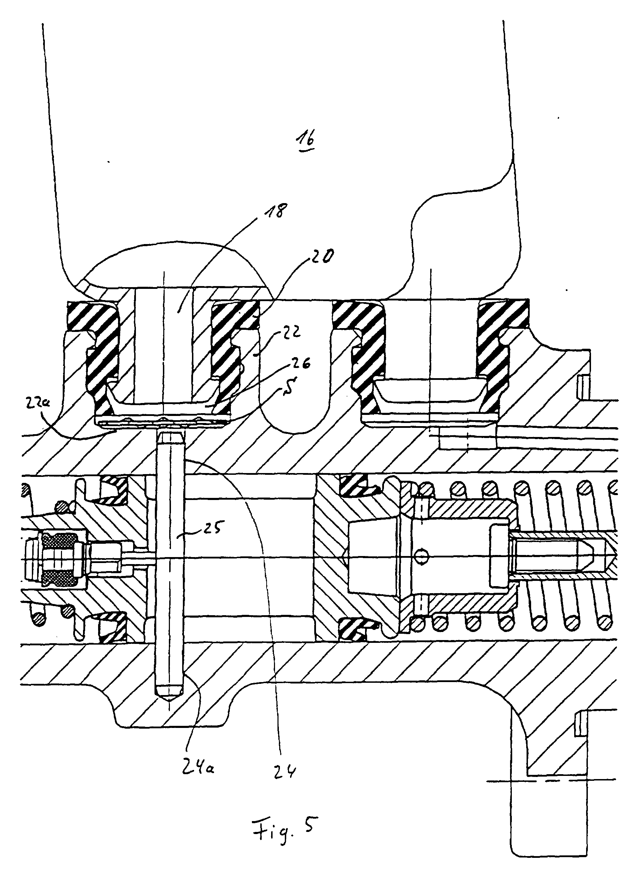

In den Fig. 4 und 5 ist der eingangs bereits erwähnte Stand der Technik veranschaulicht. Gleiche Bezugszeichen wie in den Fig. 1 bis 3a, 3b dienen der Kennzeichnung gleicher Teile. Diese werden daher nachstehend nicht nochmals erläutert.

Gegenüber der Erfindung ist beim Stand der Technik in dem Stutzen 18 kein Quersteg 28 eingearbeitet. Statt dessen ist eine Sicherungsscheibe S in den Grund 22a der Anschlußmuffe 22 eingelegt. Diese Sicherungsscheibe S weist mehrere Durchbrechungen und Stege auf, so daß auch hier der Anschlagstift 25 daran gehindert ist, aus der Bohrung 24 bzw. dem Sackloch 24a (in den montierten Vorratsbehälter 16) herauszufallen.

## Patentansprüche

1. Bremskraftverstärker mit
- einem Hauptbremszylinder (10), der einen Primärkolben (12) und einen Sekundärkolben (14) aufweist, wobei der Sekundärkolben (14) durch einen quer zur Längsachse (L) des Hauptbremszylinders (10) in einer Bohrung (24) aufgenommenen Anschlagstift (25) in seiner Axialbeweglichkeit begrenzt ist, und
- einem Vorratsbehälter (16) für Bremsflüssigkeit, der einen Anschluß (17) aufweist, durch den der Vorratsbehälter (16) mit dem Hauptbremszylinder (10) verbunden ist, wobei
- der Anschluß (17) in axialer Verlängerung zu dem Anschlagstift (25) angeordnet ist,
- der Anschluß (17) in seinem Strömungsquerschnitt einen Quersteg (28) aufweist, der die Bohrung (24) zumindest teilweise überdeckt, und
- der Anschluß (17) einen an dem Vorratsbehälter (16) angeformten Stutzen (18) aufweist,
dadurch gekennzeichnet, daß
- der Quersteg (28) in oder an dem Stutzen (18) ausgebildet ist, und
- der Quersteg (28) so dimensioniert ist, daß er im endmontierten Zustand des Vorratsbehälters (16) an dem Hauptbremszylinder (10) ein Herausfallen des Anschlagstiftes (25) verhindert, ohne dabei den Fluß der Bremsflüssigkeit zu beeinträchtigen.

2. Bremsverstärker nach Anspruch 1,
dadurch gekennzeichnet, daß
- der Anschluß (17) in eine Öffnung (22) in dem Hauptbremszylinder (10) eingesetzt ist, die mit der Bohrung (24) fluchtet, und
- der Anschluß (17) durch einen an dem Vorratsbehälter (16) angeformten Stutzen (18) und eine Dichtung (20) gebildet ist.

3. Bremskraftverstärker nach Anspruch 1 oder 2,
dadurch gekennzeichnet, daß
- der Quersteg (28) im Bereich des freien Endes (26) des Stutzens (18) angeordnet ist.

4. Bremskraftverstärker mit
- einem Hauptbremszylinder (10), der einen Primärkolben (12) und einen Sekundärkolben (14) aufweist, wobei der Sekundärkolben (14) durch einen quer zur Längsachse (L) des Hauptbremszylinders (10) in einer Bohrung (24) aufgenommenen Anschlagstift (25) in seiner Axialbeweglichkeit begrenzt ist, und
- einem Vorratsbehälter (16) für Bremsflüssigkeit, der einen Anschluß (17) aufweist, durch den der Vorratsbehälter (16) mit dem Hauptbremszylinder (10) verbunden ist, wobei
- der Anschluß (17) in axialer Verlängerung zu dem Anschlagstift (25) angeordnet ist,
- der Anschluß (17) in seinem Strömungsquerschnitt einen Quersteg (28) aufweist, der die Bohrung (24) zumindest teilweise überdeckt, und
- der Anschluß (17) eine Dichtung (20) aufweist,
dadurch gekennzeichnet, daß
- der Quersteg (28) in oder an der Dichtung (20) ausgebildet ist, und
- der Quersteg (28) so dimensioniert ist, daß er im endmontierten Zustand des Vorratsbehälters (16) an dem Hauptbemszylinder (10) ein Herausfallen des Anschlagstiftes (25) verhindert, ohne dabei den Fluß der Bremsflüssigkeit zu beeinträchtigen.

5. Bremskraftverstärker nach Anspruch 4,
dadurch gekennzeichnet, daß
- die Dichtung im Längsschnitt im wesentlichen trogförmig ist, wobei der Boden des Troges einen Quersteg bildet.

6. Bremskraftverstärker nach Anspruch 4 oder 5,
dadurch gekennzeichnet, daß
- der Quersteg gitterförmig ausgestaltet ist.

7. Bremskraftverstärker nach Anspruch 4 oder 5,
dadurch gekennzeichnet, daß
- der Quersteg sich vom Rand der Dichtung etwa bis zur Mitte erstreckt.

8. Dichtung für einen Stutzen (18), der dazu geeignet ist, einen Vorratsbehälter (16) an einen Hauptbremszylinder (10) anzuschließen,
dadurch gekennzeichnet, daß
- die Dichtung im Längsschnitt im wesentlichen trogförmig ist, wobei der Boden des Troges einen Quersteg bildet, und
- der Quersteg so dimensioniert ist, daß er im endmontierten Zustand des Vorratsbehälters (16) an dem Hauptbremszylinder (10) ein Herausfallen eines Anschlagstiftes (25) verhindern kann, ohne dabei den Fluß von Bremsflüssigkeit zu beeinträchtigen.

9. Dichtung nach Anspruch 8,
dadurch gekennzeichnet, daß
- der Quersteg gitterförmig ausgestaltet ist.

10. Dichtung nach Anspruch 8,
dadurch gekennzeichnet, daß
- der Quersteg sich vom Rand der Dichtung etwa bis zur Mitte erstreckt.

## Claims

1. A brake booster having
- a master cylinder (10) comprising a primary piston (12) and a secondary piston (14), with the secondary piston (14) being limited in its axial movability by a stop pin (25) which is accepted in a hole (24) extending transversely to a longitudinal axis (L) of the master cylinder (10), and
- a reservoir (16) for brake fluid, comprising a connection (17) via which the reservoir (16) is connected with the master cylinder (10), wherein
- the connection (17) is arranged in an axial extension of the stop pin (25),
- the connection (17) is provided with a transverse web (28) in its flow cross-sectional area, which covers the hole (24) at least partially, and
- the connection (17) comprises a fitting (18) formed on the reservoir (16),
characterised in that
- the transverse web (28) is formed in or at the fitting (18), and
- the transverse web (28) is dimensioned such that, in the finally mounted condition of the reservoir (16) to the master cylinder (10), it prevents that the stop pin (25) can fall out, without affecting the flow of the brake fluid.

2. The brake booster according to Claim 1,
characterised in that
- the connection (17) is installed in an opening (22) in the master cylinder (10), which is in alignment with the hole (24), and
- the connection (17) is constituted by a fitting (18) formed on the reservoir (16) and a seal (20).

3. The brake booster according to Claim 1 or 2,
characterised in that
- the transverse web (28) is arranged in the area of the free end (26) of the fitting (18).

4. A brake booster having
- a master cylinder (10), comprising a primary piston (12) and a secondary piston (14), with the secondary piston (14) being limited in its axial movability by a stop pin (25) which is accepted in a hole (24) extending transversely to a longitudinal axis (L) of the master cylinder (10), and
- a reservoir (16) for brake fluid, comprising a connection (17) via which the reservoir (16) is connected with the master cylinder (10), wherein
- the connection (17) is arranged in an axial extension of the stop pin (25),
- the connection (17) is provided with a transverse web (28) in its flow cross-sectional area, which covers the hole (24) at least partially, and
- the connection (17) comprises a seal (20),
characterised in that
- the transverse web (28) is formed in or at the seal (20), and
- the transverse web (28) is dimensioned such that, in the finally mounted condition of the reservoir (16) to the master cylinder (10), it prevents that the stop pin (25) can fall out, without affecting the flow of the brake fluid.

5. The brake booster according to Claim 4,
characterised in that
- the seal is essentially trough-shaped in longitudinal section with the bottom of the trough forming a transverse web.

6. The brake booster according to Claim 4 or 5,
characterised in that
- the transverse web has a grid-like configuration.

7. The brake booster according to Claim 4 or 5,
characterised in that
- the transverse web extends from the edge of the seal approximately up to the centre.

8. A seal for a fitting (18) which is adapted to connect a reservoir (16) with a master cylinder (10),
characterised in that
- the seal is essentially trough-shaped in longitudinal section with the bottom of the trough forming a transverse web, and
- the transverse web (28) is dimensioned such that, in the finally mounted condition of the reservoir (16) to the master cylinder (10), it can prevent that a stop pin (25) falls out, without affecting the flow of the brake fluid.

9. The seal according to Claim 8,
characterised in that
- the transverse web has a grid-like configuration.

10. The seal according to Claim 8,
characterised in that
- the transverse web extends from the edge of the seal approximately up to the centre.

## Revendications

1. Servofrein comprenant
- un maître cylindre de frein (10) qui présente un piston primaire (12) et un piston secondaire (14), le piston secondaire (14) étant limité dans sa mobilité axiale par une goupille de butée (25) logée dans un alésage (24) transversal par rapport à l'axe longitudinal (L) du maître cylindre de frein (10), et
- un réservoir (16) pour du liquide de frein, qui présente un raccord (17) par lequel le réservoir (16) est relié au maître cylindre de frein (10),
- le raccord (17) étant disposé en prolongement axial de la goupille de butée (25),
- le raccord (17) présentant dans sa section d'écoulement une barrette transversale (28) qui recouvre au moins partiellement l'alésage (24), et
- le raccord (17) présentant une tubulure (18) adaptée au réservoir (16),
caractérisé en ce que
- la barrette transversale (28) est formée dans ou sur la tubulure (18) et
- la barrette transversale (28) est dimensionnée de telle façon qu'elle empêche, à l'état monté final du réservoir (16) sur le maître cylindre de frein (10) la goupille de butée (25) de tomber sans pour autant nuire à l'écoulement du liquide de frein.

2. Servofrein selon la revendication 1,
caractérisé en ce que
- le raccord (17) est monté dans une ouverture (22) que présente le maître cylindre de frein (10), qui est alignée avec l'alésage (24) et
- le raccord (17) est formé par une tubulure (18) adaptée au réservoir (16) et une garniture d'étanchéité (20).

3. Servofrein selon la revendication 1 ou 2,
caractérisé en ce que
- la barrette transversale (28) est disposée dans la région de l'extrémité libre (26) de la tubulure ( 18).

4. Servofrein comprenant
- un maître cylindre de frein (10) qui présente un piston primaire (12) et un piston secondaire (14), le piston secondaire (14) étant limité dans sa mobilité axiale par une goupille de butée (25) logée dans un alésage (24) transversal par rapport à l'axe longitudinal (L) du maître cylindre de frein (10), et
- un réservoir (16) pour du liquide de frein, qui présente un raccord (17) par lequel le réservoir (16) est relié au maître cylindre de frein (10),
- le raccord (17) étant disposé en prolongement axial de la goupille de butée (25),
- le raccord (17) présentant dans sa section d'écoulement une barrette transversale (28) qui recouvre au moins partiellement l'alésage (24), et
- le raccord (17) présentant une garniture d'étanchéité (20),
caractérisé en ce que
- la barrette transversale (28) est formée dans ou sur la garniture d'étanchéité (18) et
- la barrette transversale (28) est dimensionnée de telle façon qu'elle empêche, à l'état monté final du réservoir (16) sur le maître cylindre de frein (10) la goupille de butée (25) de tomber sans pour autant nuire à l'écoulement du liquide de frein.

5. Servofrein selon la revendication 4,
caractérisé en ce que
- la garniture d'étanchéité est principalement en forme d'auge en coupe longitudinale, le fond de l'auge formant une barrette transversale.

6. Servofrein selon la revendication 4 ou 5,
caractérisé en ce que
- la barrette transversale est en forme de grille.

7. Servofrein selon la revendication 4 ou 5,
caractérisé en ce que
- la barrette transversale s'étend du bord de la garniture d'étanchéité jusqu'à environ la moitié.

8. Garniture d'étanchéité pour une tubulure (18) qui soit adaptée pour raccorder un réservoir (16) à un maître cylindre de frein (10),
caractérisée en ce que
- la garniture d'étanchéité est principalement en forme d'auge en coupe longitudinale, le fond de l'auge formant une barrette transversale, et
- la barrette transversale est dimensionnée de telle façon qu'elle puisse empêcher, à l'état monté final du réservoir (16) sur le maître cylindre de frein (10), une goupille de butée (25) de tomber sans pour autant nuire à l'écoulement de liquide de frein.

9. Garniture d'étanchéité selon la revendication 8,
caractérisée en ce que
- la barrette transversale est en forme de grille.

10. Garniture d'étanchéité selon la revendication 8,
caractérisée en ce que
- la barrette transversale s'étend du bord de la garniture d'étanchéité jusqu'à environ la moitié.
